# EUROPÄISCHE PATENTSCHRIFT

(11) **EP 1 717 396 B1**
(45) Veröffentlichungstag und Bekanntmachung des Hinweises auf die Patenterteilung: **17.02.2016**
(21) Anmeldenummer: 06004783.4
(22) Anmeldetag: 09.03.2006
(51) Int. Cl.: E05F 5/10, F16F 9/02, F16F 9/32, F16F 9/346, F16F 9/512

(54) **Anschlagdämpfer**
Abutment damper
Butée d'amortissement

(30) Priorität: 29.04.2005 DE 102005020476
(43) Veröffentlichungstag der Anmeldung: 02.11.2006
(73) Patentinhaber: KARL SIMON GmbH & Co. KG, 78733 Aichhalden (DE)
(72) Erfinder: Bantle, Ulrich, 72186 Empfingen (DE); Eschle, Jürgen, 78733 Aichhalden (DE)
(74) Vertreter: Herrmann, Jochen

(56) Entgegenhaltungen:
- FR-A- 1 000 227
- US-A- 4 707 882
- US-A- 4 877 226
- US-A- 5 727 286

## Beschreibung

Die Erfindung betrifft einen Anschlagdämpfer mit einem Dämpferkörper, der einen Zylinder aufweist, wobei in einem Aufnahmeraum des Zylinders ein Kolben verstellbar geführt ist, wobei bei Verstellung des Kolbens ein im Aufnahmeraum gebildeter Luftdruck eine auf den Kolben wirkende Bremskraft ausübt, wobei der Aufnahmeraum zum Abbau des Luftdruckes wenigstens eine Öffnung aufweist, die eine luftleitende Verbindung zwischen dem Aufnahmeraum und der Umgebung schafft.

Ein derartiger Anschlagdämpfer ist aus der DE 20107 426 U1 bekannt. Dabei ist ein Dämpferkörper verwendet, der einen Zylinder aufweist. Der Zylinder umgibt einen Aufnahmeraum in dem ein Kolben verstellbar geführt ist. In den Kolbenboden ist, ausgehend vom Aufnahmeraum des Zylinders eine Bohrung eingebracht. In die Bohrung mündet eine Querbohrung.

Diese schafft eine luftleitende Verbindung zwischen dem Aufnahmeraum und der Umgebung. Zur Bildung eines Rückschlagventils sind in die Bohrung eine Feder und eine Kugel eingesetzt. Um die Kugel unverlierbar zu halten, ist in die Bohrung ein Innengewinde eingeschraubt, in das eine Schraube eingedreht ist. Die Schraube hat einen Dichtsitz, auf dem die Kugel dichtend aufliegt. Die Schraube hat im Anschluss an den Dichtsitz eine Durchgangsbohrung. Beim Einfahren des Kolbens entsteht im Aufnahmeraum ein Überdruck. Dieser verschiebt eine Kugel in der Bohrung soweit, dass Luft durch die Querbohrung in die Umgebung entweichen kann. Ist der Druckunterschied ausgeglichen, schließt die Kugel wieder die luftleitende Verbindung.

Dieser bekannte Anschlagdämpfer weist einen komplizierten Aufbau mit vielen Teilen auf. Darüber hinaus weist er keine zufriedenstellende Dämpfungswirkung auf. Es hat sich gezeigt, dass sobald die Kugel bei anstehendem Überdruck vom Dichtsitz abhebt, ein schlagartiger Druckabbau stattfindet. Bei im Möbelbau eingesetzten Anschlagdämpfern ist aber ein verzögerter Druckabbau für eine optimale Dämpfungswirkung erforderlich. Aufgrund von Fertigungstoleranzen oder bei Temperaturschwankungen kann der Abhebezeitpunkt der Kugel nicht einheitlich festgelegt werden.

Die US4707882-A1 offenbart die Merkmale des Oberbegriffs des Anspruchs 1.

Es ist Aufgabe der Erfindung, einen Anschlagdämpfer zu schaffen, der bei einfachem Aufbau eine gleichbleibend gute Dämpfungscharakteristik aufweist.

Diese Aufgabe wird mit den Merkmalen des Anspruches 1 gelöst.

Bei dieser Ausgestaltung hat der Erfinder die Erkenntnis erhalten, dass für einen kontinuierlichen Druckabbau ein sehr kleiner Öffnungsquerschnitt erforderlich ist. Dieser lässt sich mit der angegebenen erfindungsgemäßen Lösung einfach und reproduzierbar erstellen. Die kraftschlüssige Verbindung zwischen dem Einsatzteil und der Aufnahme sichert außerhalb der Öffnung eine gute Abdichtung zwischen dem Einsatzteil und der Aufnahme. Diese Abdichtung bleibt auch bei Temperaturschwankungen und unterschiedlichen Ausdehnungen des Einsatzteils und der Aufnahme erhalten. Damit ist der Anschlagdämpfer sehr betriebssicher. Darüber hinaus ist der Anschlagdämpfer einfach fertigbar, denn zur Bildung der Öffnung muss nur der Einsatzkörper in beziehungsweise auf die Aufnahme ein-/aufgesetzt werden.

Gemäß einer bevorzugten Erfindungsgestaltung ist es vorgesehen, dass die Aufnahme eine Bohrung ist, in die das als Zylinder oder Kugel ausgebildete Einsatzteil eingesetzt ist. Der Zylinder und insbesondere auch die Kugel können als maßhaltige Massenteile kostengünstig bezogen werden.

Wenn vorgesehen ist, dass an die als Bohrung ausgebildete Aufnahme unter Bildung eines Absatzes eine querschnittsverringerte Durchführung angeschlossen ist, und dass der Absatz einen Anschlag für das Einsatzteil bildet, dann wird auf einfache Weise die Einsetzbewegung des Einsatzteils in die Aufnahme begrenzt. Damit ist auch eine passgenaue Positionierung des Einsatzteils möglich.

Erfindungsgemäß ist eine Materialpaarung vorgesehen, bei derdas Material des Einsatzteils und das die Aufnahme bildende Material eine unterschiedliche Härte aufweisen. Hierdurch wird erreicht, dass sich das weichere Bauteil dichtend an das härtere Bauteil anlegt und so ein definierter Dichtabschluss entsteht.

Dabei kann es insbesondere bevorzugt vorgesehen sein, dass das Einsatzteil aus Metall besteht und das die Aufnahme bildende Material ein Kunststoff, vorzugsweise ein Thermoplast ist.

Eine besonders einfache Fertigung ergibt sich dann, wenn der Anschlagdämpfer dergestalt ist, dass die Öffnung mittels einer sich in Richtung der Mittellängsachse der Aufnahme erstreckenden, in das Material der Aufnahme eingetieften Rille gebildet ist, die an ihrem der Aufnahme zugekehrten Bereich mit dem Einsatzteil überdeckt ist.

Insbesondere kann das die Aufnahme bildende Bauteil dann auch maßhaltig als Spritzgussteil gefertigt werden.

Eine bevorzugte Erfindungsvariante ist dergestalt, dass der Kolben einen Balgabschnitt aufweist, der abhängig von den Druckverhältnissen im Aufnahmeraum in Wirkverbindung mit dem Zylinder steht. Der Balgabschnitt dient zur Verstärkung der Bremskraft. Dieser wird bei einem zwischen den Aufnahmeraum und der Umgebung gebildeten Differenzdruck (Überdruck im Aufnahmeraum) aufgebläht. Der Balgabschnitt legt sich dann an die Innenwandung des Zylinders an und erhöht so die Reibung des Kolbens. Dabei ergibt sich eine besonders einfache Konstruktion, wenn vorgesehen ist, dass der Kolben und der Balgabschnitt einteilig miteinander verbunden sind. Insbesondere ist damit ein verringerter Dichtaufwand erforderlich.

Der konstruktive Aufwand lässt sich noch zusätzlich dann reduzieren, wenn vorgesehen ist, dass die Kolbenstange einteilig an den Kolben angeformt ist.

Eine mögliche Erfindungsausgestaltung kann derart sein, dass der Kolbenstange ein Stützkörper zugeordnet ist oder diese einen solchen aufweist, dass der Stützkörper eine Anschlagseite aufweist, die außerhalb des Dämpferkörpers angeordnet ist, und dass der Sützkörper über einen Absatz an dem Kolben abgestützt ist.

Mit dem Stützkörper kann je nach Auslegung die Kolbenstange ausgesteift werden. Gleichzeitig kann über den Stützkörper auch die Aufprallkraft beispielsweise einer auftreffenden Tür oder Klappe aufgenommen und zumindest teilweise direkt in den Kolben übertragen werden.

Dies ist besonders auch dann von Vorteil, wenn vorgesehen ist, dass der Kolben und der Balgabschnitt aus weichelastischem Material besteht. Dann wird der Kolben von der Aufprallkraft federelastisch beaufschlagt und damit über Hysterese ein Teil der Aufprallkraft vernichtet werden.

Die weichelastische Ausbildung von Kolben und Balgabschnitt ermöglichen auch die Verwirklichung einer Werkstoffpaarung mit dem Zylinder die über hohe Reibwerte eine starke Dämpfung ermöglichen. Wenn auch die Kolbenstange aus einem weichelastischen Material besteht, ist aus Festigkeitsgründen vorgesehen, dass die Kolbenstange mittels eines Mantelteils ausgesteift ist.

Eine denkbare Erfindungsalternative ist dergestalt, dass die Kolbenstange auf ihrer dem Kolben abgewandten Seite ein Prallstück aus weichelastischem Material bildet. Über das Prallstück kann die Aufprallkraft aufgenommen und bereits teilweise gedämpft werden.

Wenn vorgesehen ist, dass der Balgabschnitt einen zylinderförmigen Teil aufweist, der im Abstand zur Innenwandung des Zylinders gehalten ist, und dass der von dem zylinderförmigen Teil umgebene Bereich einem Druckraum des Zylinders zugeordnet ist, dann kann sich der Balgabschnitt bei Druckbeaufschlagung umlaufend an die Innenwandung des Zylinders anlegen und dort eine gleichmäßige und große Bremskraft bewirken.

Die Funktionalität des Balgabschnittes lässt sich noch zusätzlich dann erhöhen, wenn vorgesehen ist, dass der zylinderförmige Teil des Balgabschnittes eine Federaufnahme bildet, in der eine Feder zumindest teilweise aufgenommen ist, und dass die Feder den Kolben entgegen der Einschubbewegung des Kolbens in den Zylinder gegenüber dem Zylinder abstützt.

Eine weitere konstruktive Vereinfachung ergibt sich dadurch, dass der Balgabschnitt ein angeformtes Dichtelement trägt, das einen Druck- und einen Unterdruckraum des Zylinders gegeneinander abdichtet.

Die Bremswirkung des Anschlagdämpfers lässt sich noch dadurch steigern, dass sowohl der Unterdruck-, als auch der Druckraum mittels wenigstens einer Öffnung mit der Umgebung in luftleitender Verbindung stehen.

Dies wird insbesondere dadurch möglich, dass die Öffnungen oder den Öffnungen zugeordnete Drosselglieder so gestaltet sind, dass eine dosierte Luftströmung erzielt ist.

Beispielsweise kann eine Luft-Volumenströmung zu einem kontrollierten Druckabbau und gleichzeitig eine gute Dämpfung erreicht werden, wenn vorgesehen ist, dass wenigstens eine der Öffnungen einen Durchmesser D < 0,2 mm, vorzugsweise < 0,1 mm aufweist. Insbesondere Durchmesser < 0,1 mm zeigen eine gute Drosselwirkung für die Anwendung im Möbelbau.

Diese Dämpfung kann insbesondere auch befriedigend dadurch erreicht werden, dass das Verhältnis der Querschnittsfläche des Kolbens in dem, dem Hohlraum zugewandten Bereich zu dem Öffnungsquerschnitt der Öffnung grösser als 4000/1 ist.

Die Erfindung wird im Folgenden anhand eines in den Zeichnungen dargestellten Ausführungsbeispieles näher erläutert. Es zeigen:
Fig. 1 : einen Anschlagdämpfer in Seitenansicht,
Fig. 2 : den Ansschlagdämpfer entlang dem in Fig. 1 mit II-II angegebener Schnittverlauf,
Fig. 3 : eine in Fig. 1 mit III gekennzeichnete Detaildarstellung und
Fig. 4 : eine Schnittdarstellung längs des in Fig. 1 mit IV-IV gekennzeichneten Schnittverlaufes.

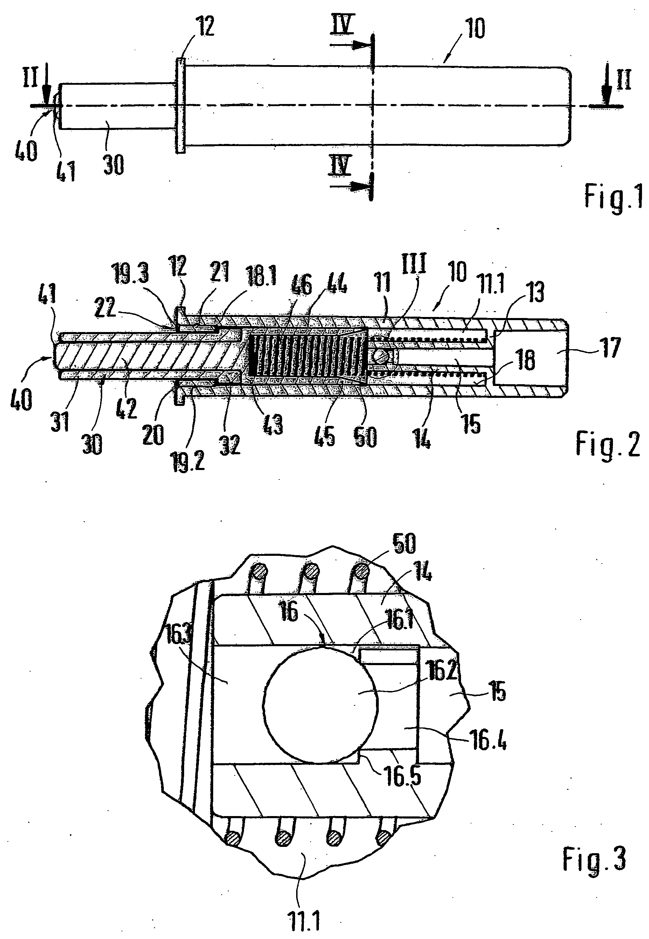

In den Fig. 1 und 2 ist ein Anschlagdämpfer mit einem längsgestreckten Dämpferkörper 10 dargestellt. Der Dämpferkörper 10 bildet einen Zylinder 11. Der Zylinder 11 umgibt einen Aufnahmeraum 11.1, in dem ein Kolben 43 eines Gleitelementes 40 linear verstellbar gehalten ist.

In den Aufnahmeraum 11.1 ragt eine Federführung 14, die in Form eines Hohlzylinders an einen Boden 13 des Dämpferkörpers 10 einteilig angeformt ist. Im Bereich seiner dem Boden 13 abgewandten Seite weist der die Federführung 14 eine Öffnung 16 auf, die später noch detailiert unter Bezugnahme auf Fig. 3 erläutert wird, in Form einer Bohrung auf. Die Öffnung 16 schafft eine räumliche Verbindung zwischen dem Aufnahmeraum 11.1 und einem von der Federführung umgebenen Luftführungskanal 15. Dabei ist der Durchmesser der Öffnung < 0,1 mm um einen dosierten Luftaustausch zwischen dem Aufnahmeraum 11.1 und dem Luftführungskanal 15 zu ermöglichen. Anstatt einer Bohrung kann auch jeder beliebige, sonstige Öffnungsquerschnitt verwirklicht sein. Gute Dämpfungsergebnisse werden erreicht, wenn die Querschnittsfläche des Kolbens 43 in dem dem Aufnahmeraum 11.1 zugewandten Endbereich zu dem Öffnungsquerschnitt der Öffnung im Verhältnis 4000/1 steht.

Der Luftführungskanal 15 läuft in einem Hohlraum 17 aus, der von einem zylinderförmigen Endabschnitt des Dämpferkörpers 10 gebildet ist. Der Dämpferkörper 10 ist als Spritzgussteil gebildet. Die Innenwandung 18 des Zylinders 11 ist aus Entformungsgründen mit einem leichten Öffnungskonus ausgeführt, so dass sich der Aufnahmeraum 11. zum Bereich der dem Boden 13 gegenüberliegenden Eintrittsöffnung leicht erweitert.

Wie bereits vorstehend erwähnt wurde, ist in dem Aufnahmeraum 11.1 ein Gleitstück 40 geführt. Das Gleitstück 40 ist einteilig aufgeführt und umfasst eine Kolbenstange 42, den Kolben 43 und einen Balgabschnitt 44. Das Gleitstück 40 ist ebenfalls als Spritzgussteil ausgeführt und besteht aus einem weichelatischen Werkstoff, beispielsweise aus einem TPE-Material.

Die Kolbenstange 42 ist an der dem Balgabschnitt 44 gegenüberliegenden Seite an den Kolben 43 angeformt. Sie ist im Querschnitt zylinderförmig und ragt aus dem Aufnahmeraum 11.1 des Dämpferkörpers 11 heraus. Endseitig ist sie mit einem als Endkappe ausgebildeten Prallstück 41 versehen.

In alternativer Ausführung kann auch auf die an den Kolben 43 angeformte Kolbenstange 42 verzichtet werden. Die Kolbenstange wird dann alleine von dem Stützkörper 30 gebildet. Eine mechanische Verbindung zwischen dem Kolben 43 und dem Stützkörper 30 ist bei dem vorliegenden Aufbau nicht notwendig. Allerdings ist dann eine Zentrierung dieser beiden Bauteile vorteilhaft.

Die Kolbenstange 42 ist von einem Stützkörper 30 umgeben. Dieser weist hierzu eine hohlzylindrische Aufnahme auf, die im Querschnitt an den Außenquerschnitt der Kolbenstange 42 angepasst ist. Sie ist von einem Mantelteil 31 gebildet. Das Material des Stützkörpers 30 ist biegesteif, so dass die Kolbenstange 42 ausgesteift wird. Wie die Fig. 1 deutlich erkennen lässt, stützt sich der Stützkörper 30 mit einem radial verbreiterten Absatz 32 auf dem Kolben 43 ab. Der Absatz'32 kann zur Führung des Kolbens 43 ausgenutzt werden. Dann ist er radial so verbreitert, dass er mit der Innenwandung 18 des Aufnahmeraumes 11.1 eine Führung bildet. Je nach Auslegung des Absatzes 32 kann insbesondere auch die Verkantungsgefahr für den Kolben 43 minimiert werden.

Der Balgabschnitt 44 ragt in den Aufnahmeraum 11.1 hinein. Er ist als Hohlzylinder mit vorzugsweise gleichbleibender Wandstärke ausgeführt, so dass er um seinen Umfang gleiche Werkstückeigenschaften, insbesondere ein einheitliches Dehnverhalten aufweist. Die Wandung kann aber auch ballig oder zur Erreichung einer variierenden Kraft mit veränderlichem Querschnitt ausgeführt werden. Beispielsweise kann ein Querschnitt mit im Mittenbereich mit vermindertem Querschnitt verwendet sein. An seinem freien offenen Ende weist der Balgabschnitt 44 ein umlaufendes Dichtelement 45 auf, das mit einer Dichtlippe an der Innenwandung 18 des Aufnahmeraumes 11.1 dichtend anliegt. Das Dichtelement 45 ist dabei so ausgeführt, dass es über den gesamten Gleitbereich dichtet und aufgrund seiner Materialelastizität den Öffnungskonus des Aufnahmeraumes 11.1 ausgleicht.

Der Balgabschnitt 44 umgibt eine Federaufnahme 46, in die eine Feder 50 eingestellt ist. Dabei ist die Federaufnahme 46 so dimensioniert, dass sie ein Ausknicken der Feder 50 verhindert. Die Feder 50 stützt sich mit ihrem einen Ende an dem Kolben 43 ab. Das andere Federende legt sich an den Boden 13 an. Die Feder 50 ist über die Federführung 14 gestellt, die ebenfalls ein Ausknicken der Feder 50 verhindert. Die Federaufnahme 46 ist so ausgebildet, dass die Federführung 14 und die Feder 50 beim Einschieben des Gleitstückes 40 darin Platz finden und die Kolbenbewegung dabei nicht behindert wird.

Zur Fixierung des Gleitstückes 40 in der in Fig. 1 dargestellten ausgefahrenen Endstellung dient ein Anschlagelement 20. Dieses ist als Ring ausgeführt und weist an seinem Außenumfang einen umlaufenden wulstförmigen Rastansatz 21 auf. Das Anschlagelement 20 weist eine hohlzylindrische Durchführung 22 auf, durch die das Mantelteil 31 des Stützkörpers 30 hindurchgeführt ist. Dabei ist der Außendurchmesser des Mantelteils 31 auf den Innendurchmesser der Durchführung angepasst, so dass sich eine stabile Linearführung für den Stützkörper 30 ergibt. Dabei ist die Materialpaarung zwischen dem Stützkörper 30 und dem Anschlagelement 20 so gewählt, dass sich eine leichtgängige Lagerung ergibt.

Das Anschlagelement 20 kann bei der Montage über eine Einführerweiterung 19.3 des Dämpferkörpers 10 leicht in den Aufnahmeraum 11.1 eingeführt werden. Die Einführungsbewegung wird dabei mittels eines Absatzes 19.1 des Dämpferkörpers 10 begrenzt. In seiner Montagestellung rastet das Anschlagelement 20 mit seinem Rastansatz 21 in die Rastaufnahme 19.2 ein.

In der in Fig. 1 gezeigten Endstellung stützt das Anschlagelement 20 den Stützkörper 30 an dem Absatz 32 und damit den Kolben 43 gegen die Vorspannung der Feder 50 ab.

Die Fig. 3 zeigt in vergrößerter Detaildarstellung das dem Boden 13 abgekehrte Ende der Federführung 14. Wie diese Darstellung erkennen lässt, ist in das freie Ende der Federführung 14 eine bohrungsförmige Aufnahme 16.3 eingebracht. Diese Aufnahme 16.3 geht in eine ebenfalls bohrungsförmige Durchführung 16.4 über. Die Durchführung 16.4 ist konzentrisch zu der Aufnahme 16.3 angeordnet. Sie weist jedoch einen geringeren Durchmesser auf, so dass sich ein Absatz 16.5 ergibt.

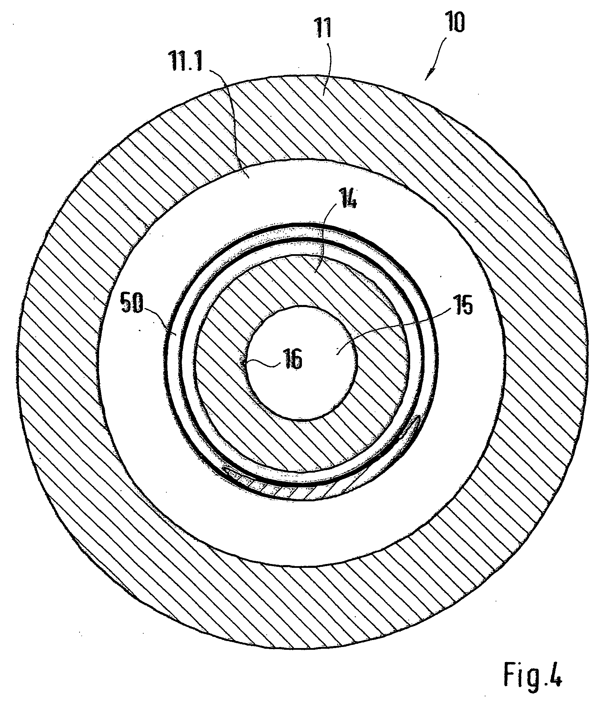

Die Aufnahme 16.3 weist eine seitlich eingebrachte Rille auf, die sich in Richtung der Mittellängsachse der Aufnahme 16.3 erstreckt. Diese Rille bildet die Öffnung 16, wie dies aus der Fig. 4 deutlicher hervorgeht. Die Rille erstreckt sich bis in den Bereich der Durchführung 16.4, so dass eine luftleitende Verbindung zwischen dem Aufnahmeraum 11.1 und der Umgebung entsteht. Der offene Seitenbereich der Rinne wird mittels eines Einsatzteils 16.2 überdeckt, so dass die Öffnung 16 entsteht (s. Fig. 4). Das Einsatzteil 16.2 ist vorliegend als Metallkugel ausgebildet. Diese ist in die Aufnahme 16.3 eingepresst, so dass sie kraftschlüssig in der Aufnahme 16.3 gehalten ist.

Mit der kraftschlüssigen Verbindung ergibt sich auch eine Deformation des Materials der Aufnahme 16.3, so dass eine Dichtung zwischen dem Einsatzteil 16.2 und der Aufnahme 16.3 entsteht.

Nachfolgend soll kurz die Funktionsweise des Anschlagdämpfers beschrieben werden, der an beispielsweise einem Möbelstück mit einer anscharnierten Klappe zum Einsatz kommt. Üblicherweise hat der Möbelkorpus des Möbelstücks eine Aufnahmebohrung, in die der Dämpferkörper 10 mit seiner zylindrischen Außenkontur eingesetzt werden kann. Dabei schlägt der Flansch 12 des Dämpferkörpers 10 an dem Möbelkorpus im Bereich der Aufnahmebohrung an.

Die sich schließende Klappe trifft zunächst auf das Prallstück 41 der Kolbenstange 42 auf. Aufgrund der elastischen Materialeigenschaften des Prallkörpers 41 wird das mechanische Aufprallgeräusch der Klappe kompensiert. Abhängig von der Auftreffenergie der Klappe wird der Prallkörper 41 verformt. Durch starken Aufprall wird der Prallkörper 41 vollständig in das Mantelteil 31 hinein verformt und die Klappe kommt in Kontakt mit dem freien Ende des Mantelteils 31. Über die Kolbenstange 42 bzw. das Mantelteil 31 wird die Kraft auf den Kolben 43 übertragen. Die ringförmige Anlage des Absatzes 32 an dem Kolben 43 sichert dabei eine gleichmäßige Krafteinleitung. Je nach Stärke der Aufprallenergie kann ein Energieteil infolge der elastischen Verformung des Kolbens 43 gedämpft werden.

Der Kolben 43 wird in den Aufnahmeraum 11.1 hinein verschoben. Dabei baut sich ein Druck im Aufnahmeraum 11.1, unterstützt durch die Dichtwirkung der Dichtung 45 auf. Der Druck wird gleichzeitig über die Öffnung 16 abgebaut.

Geschieht der Druckaufbau in kurzer Zeitdauer, so erfolgt der Druckabbau jedoch nicht in dem Masse wie er über die Öffnung 16 abgebaut wird. Es entsteht ein dämpfender Überdruck im Aufnahmeraum 11.1. Dieser Überdruck wirkt auf den Balgabschnitt 44. Da in dem Zwischenraum zwischen der Innenwandung 18 und der Außenfläche des Balgabschnittes 44 Umgebungsdruck herrscht, entsteht ein Druckgefälle. Dieses bläht den Balgabschnitt 44 auf, so dass er sich an die Innenwandung 18 anlegt. Er unterstützt dabei die Dämpfung aufgrund der Gleitreibung. Mit der weichelastischen Materialeigenschaft des Balgabschnittes 44 ist die Reibung entsprechend groß. Wenn das Druckgefälle absinkt, kehrt der Balgabschnitt 44 wieder in seine Ausgangsposition zurück.

Nach einer Entlastung der Kolbenstange 42 kehrt der Kolben 43 wieder, unterstützt durch die Feder 50 in seine Ausgangsstellung gemäß Fig. 1 zurück. Dabei wird Umgebungsluft über die Öffnung 16 in den Aufnahmeraum 11.1 eingesaugt.

Die Öffnung ist so dimensioniert, dass folgende Eigenschaften des Anschlagdämpfers erfüllt sind:
kontrollierter, langsamer Druckabbau zur Erreichung einer guten Dämpfung schneller Druckausgleich bei der Rückstellbewegung des Kolbens 43

Diese Eigenschaften können mit den in dem Anspruch 15 beschriebenen Verhältnissen optimal erreicht werden.

## Patentansprüche

1. Anschlagdämpfer mit einem Dämpferkörper (10), der einen Zylinder (11) aufweist, wobei in einem Aufnahmeraum (11.1) des Zylinders (11) ein Kolben (43) verstellbar geführt ist, wobei bei Verstellung des Kolbens (43) ein im Aufnahmeraum (11.1) gebildeter Luftdruck eine auf den Kolben (43) wirkende Bremskraft ausübt, wobei der Aufnahmeraum (11.1) zum Abbau des Luftdruckes wenigstens eine Öffnung (16) aufweist, die eine luftleitende Verbindung zwischen dem Aufnahmeraum (11.1) und der Umgebung schafft, wobei der Kolben (43) oder der Zylinder (11) eine Aufnahme (16.3) aufweist, in die ein Einsatzteil (16.2) eingesetzt ist, und wobei zwischen dem Einsatzteil (16.2) und der von dem Einsatzteil (16.2) berührten Wandung der Aufnahme (16.3) die Öffnung (16) gebildet ist,
wobei das Einsatzteil (16.2) derart kraftschlüssig in die Aufnahme (16.3) eingesetzt ist, dass eine Abdichtung zwischen dem Einsatzteil (16.2) und der Aufnahme (16.3) außerhalb der Öffnung (16) gebildet ist,
**dadurch gekennzeichnet,**
**dass** das Material des Einsatzteils (16.2) und das die Aufnahme (16.3) bildende Material eine unterschiedliche Härte aufweisen.

2. Anschlagdämpfer nach Anspruch 1,
**dadurch gekennzeichnet,**
**dass** die Aufnahme (16.3) eine Bohrung ist, in die das als Zylinder oder Kugel ausgebildete Einsatzteil (16.2) eingesetzt ist.

3. Anschlagdämpfer nach Anspruch 2,
**dadurch gekennzeichnet,**
**dass** an die als Bohrung ausgebildete Aufnahme (16.3) unter Bildung eines Absatzes (16.5) eine querschnittverringerte Durchführung (16.4) angeschlossen ist, und
**dass** der Absatz (16.5) einen Anschlag für das Einsatzteil (16.2) bildet.

4. Anschlagdämpfer nach einem der Ansprüche 1 bis 3,
**dadurch gekennzeichnet,**
**dass** das Einsatzteil (16.2) aus Metall besteht und
**dass** die Aufnahme (16.3) bildende Material ein Kunststoff, vorzugsweise ein Thermoplast ist.

5. Anschlagdämpfer nach einem der Ansprüche 1 bis 4,
**dadurch gekennzeichnet,**
**dass** die Öffnung (16) mittels einer sich in Richtung der Mittellängsachse der Aufnahme (16.3) erstreckenden, in das Material der Aufnahme (16.3) eingetieften Rille gebildet ist, die an ihrem der Aufnahme (16.3) zugekehrten Bereich mit dem Einsatzteil (16.2) überdeckt ist.

6. Anschlagdämpfer nach einem der Ansprüche 1 bis 5,
**dadurch gekennzeichnet,**
**dass** der Kolben (43) einen Balgabschnitt (44) aufweist, der abhängig von den Druckverhältnissen im Aufnahmeraum (11.1) in Wirkverbindung mit dem Zylinder (11) steht, und/ oder dass der Kolben (43) und der Balgabschnitt (44) einteilig miteinander verbunden sind.

7. Anschlagdämpfer nach einem der Ansprüche 1 bis 6,
**dadurch gekennzeichnet,**
**dass** die Kolbenstange (42) einteilig an den Kolben (43) angeformt ist.

8. Anschlagdämpfer nach einem der Ansprüche 1 bis 7,
**dadurch gekennzeichnet,**
**dass** der Kolbenstange (42) ein Stützkörper (30) zugeordnet ist oder diese einen solchen aufweist,
**dass** der Stützkörper (30) eine Anschlagseite aufweist, die ausserhalb des Dämpferkörpers (10) angeordnet ist, und
**dass** der Sützkörper (30) über einen Absatz (32) an dem Kolben (43) abgestützt ist.

9. Anschlagdämpfer nach einem der Ansprüche 1 bis 8,
**dadurch gekennzeichnet,**
**dass** der Kolben (43) und der Balgabschnitt (44) aus weichelastischem Material bestehen, und /oder,
**dass** die Kolbenstange (42) mittels eines Mantelteils (31) ausgesteift ist.

10. Anschlagdämpfer nach einem der Ansprüche 1 bis 9,
**dadurch gekennzeichnet,**
**dass** die Kolbenstange (42) auf ihrer dem Kolben (43) abgewandten Seite ein Prallstück (41) aus weichelastischem Material bildet.

11. Anschlagdämpfer nach einem der Ansprüche 1 bis 10,
**dadurch gekennzeichnet,**
**dass** der Balgabschnitt (44) einen zylinderförmigen Teil aufweist, der im Abstand zur Innenwandung des Zylinders (11) gehalten ist, und
**dass** der von dem zylinderförmigen Teil umgebene Bereich einen Druckraum des Zylinders (11) zugeordnet ist.

12. Anschlagdämpfer nach Anspruch 11,
**dadurch gekennzeichnet,**
**dass** der zylinderförmige Teil des Balgabschnittes (44) eine Federaufnahme (46) bildet, in der eine Feder (50) zumindest teilweise aufgenommen ist, und dass die Feder (50) den Kolben (43) entgegen der Einschubbewegung des Kolbens (43) in den Zylinder (11) gegenüber dem Zylinder abstützt.

13. Anschlagdämpfer nach einem der Ansprüche 1 bis 12,
**dadurch gekennzeichnet,**
**dass** der Balgabschnitt (44) ein angeformtes Dichtelement (45) trägt, das einen Druck- und einen Unterdruckraum des Zylinders (11) gegeneinander abdichtet.

14. Anschlagdämpfer nach Anspruch 13,
**dadurch gekennzeichnet,**
**dass** sowohl der Unterdruck- als auch der Druckraum mittels wenigstens einer Öffnung (16,16.1) mit der Umgebung in luftleitender Verbindung stehen.

15. Anschlagdämpfer nach einem der Ansprüche 1 bis 14,
**dadurch gekennzeichnet,**
**dass** wenigstens eine der Öffnungen (16,16.1) einen Durchmesser D < 0,2 mm, vorzugsweise < 0,1 mm aufweist, und/ oder dass das Verhältnis der Querschnittsfläche des Kolbens (43) in dem, dem Hohlraum zugewandten Bereich zu dem Öffnungsquerschnitt der Öffnung (38a,38b) grösser als 4000/1 ist.

## Claims

1. Stop damper with a damper body (10) having a cylinder (11), wherein a piston (43) is displaceably guided in a receiving chamber (11.1) of the cylinder (11), wherein, upon adjustment of the piston (43), air pressure is formed in a receiving chamber (11.1) in order to exert a brake force on the piston (43), wherein the receiving space (11.1) has at least an opening (16) to reduce the air pressure, wherein the opening (16) creates an air-conducting connection between the receiving chamber (11.1) and the environment, wherein the piston (43) or the cylinder (11) has a recess (16.3) into which is inserted an insert part (16.2), and wherein the opening (16) is formed between the insert part (16.2) and the wall of the recess (16.3) in contact with insert part (16.2),
wherein the insert part (16.2) is form-fit inserted into the receptacle (16.3) in such a way that a seal is formed between the insert part (16.2) and the recess (16.3) outside the opening (16),
**characterised in that**
the material of the insert part (16.2) and the material forming the housing (16.3) have different hardnesses.

2. Stop damper according to claim 1,
**characterised in that**,
the recess (16.3) is a bore, into which the insert part (16.2) in the form of a cylinder or ball is inserted.

3. Stop damper according to claim 2,
**characterised in that**,
upon forming a shoulder (16.5), the recess (16.3) in the form of a bore is connected to a passage (16.4) narrowing in cross-section, and
that the shoulder (16.5) forms a stop for the insert (16.2).

4. Stop damper according to one of claims 1 to 3,
**characterised in that**,
the insert part (16.2) is made of metal and
the material forming the housing (16.3) is a plastic, preferably a thermoplastic material.

5. Stop damper according to one of claims 1 to 4,
**characterised in that**,
the opening (16) is formed by means of an indented groove extending in the direction of the central longitudinal axis of the recess (16.3) in the material of the receptacle (16.3), wherein the region of the groove facing the recess (16.3) is covered by the insert part (16.2).

6. Stop damper according to one of claims 1 to 5,
**characterised in that**,
the piston (43) has a bellows section (44), which is in operative connection with the cylinder (11) as a function of the pressure conditions in the receiving chamber (11.1), and/or that the piston (43) and the bellows (44) are integrally connected to one another.

7. Stop damper according to one of claims 1 to 6,
**characterised in that**,
the piston rod (42) is formed integrally on the piston (43).

8. Stop damper according to one of claims 1 to 7,
**characterised in that**,
the piston rod (42) is assigned a supporting body (30) or has such a supporting body, the supporting body (30) has a stop side, which is arranged outside the damper body (10), and
the supporting body (30) is supported on the piston (43) via a shoulder (32).

9. Stop damper according to one of claims 1 to 8,
**characterised in that**,
the piston (43) and the bellows section (44) are made of flexible material, and/or,
the piston rod (42) is stiffened by means of a sleeve part (31).

10. Stop damper according to one of claims 1 to 9,
**characterised in that**,
the piston rod (42) on its side facing away from the piston (43) forms a baffle piece (41) made of flexible material.

11. Stop damper according to one of claims 1 to 10,
**characterised in that**,
the bellows section (44) has a cylindrical part which is held at a distance from the inner wall of the cylinder (11), and
the region surrounded by the cylindrical part is assigned to a pressure chamber of the cylinder (11).

12. Stop damper according to claim 11,
**characterised in that**,
the cylindrical part of the bellows section (44) has a spring recess (46), in which a spring (50) is at least partially housed, and wherein the spring (50) supports the piston (43) against the insertion movement of the piston (43) in the cylinder (11) with respect to the cylinder.

13. Stop damper according to one of claims 1 to 12,
**characterised in that**,
the bellows section (44) carries an integrally-formed sealing member (45) to seal a pressure chamber and a vacuum chamber of the cylinder (11) from one another.

14. Stop damper according to claim 13,
**characterised in that**,
both the vacuum chamber and the pressure chamber are in air-conducting connection with the environment by means of at least an opening (16,16.1).

15. Stop damper according to one of claims 1 to 14,
**characterised in that**,
at least one of the openings (16,16.1) has a diameter D < 0.2 mm, preferably < 0.1 mm, and/or that the ratio of the cross-sectional area of the piston (43) is greater than 4000/1 with respect to the region facing the hollow chamber of the opening cross-section of the opening (38a, 38b).

## Revendications

1. Amortisseur avec un corps amortisseur (10), qui comprend un cylindre (11), un piston (43) étant guidé de manière mobile dans un espace de logement (11.1) du cylindre (11), une pression d'air formée dans l'espace de logement (11.1) lors du déplacement du piston (43) exerçant une force de freinage qui agit sur le piston (43), l'espace de logement (11.1) comprenant, pour la chute de la pression d'air, au moins une ouverture (16) qui crée une liaison conduisant l'air entre l'espace de logement (11.1) et l'environnement, le piston (43) ou le cylindre (11) comprenant un logement (16.3) dans laquelle est inséré un insert (16.2) et l'ouverture (16) étant formée entre l'insert (16.2) et la paroi du logement (16.3) en contact avec l'insert (16.2),
l'insert (16.2) étant inséré de force dans le logement (16.3) de façon à ce qu'une étanchéité soit formée entre l'insert (16.2) et le logement (16.3) à l'extérieur de l'ouverture (16),
**caractérisé en ce que** le matériau de l'insert (16.2) et celui du logement (16.3) présentent des duretés différentes.

2. Amortisseur selon la revendication 1
**caractérisé en ce que**
le logement (16.3) présente un alésage dans lequel l'insert (16.2), de forme cylindrique ou sphérique, est inséré.

3. Amortisseur selon la revendication 2
**caractérisé en ce que**
au logement (16.3) conçu comme un alésage, avec la formation d'un épaulement (16.5), est raccordé un passage (16.4) dont la section est réduite et **en ce que** l'épaulement (16.5) forme une butée pour l'insert (16.2).

4. Amortisseur selon l'une des revendications 1 à 3,
**caractérisé en ce que**
l'insert (16.2) est constitué de métal et **en ce que** le matériau constituant le logement (16.3) est une matière plastique, de préférence une matière plastique thermoplastique.

5. Amortisseur selon l'une des revendications 1 à 4,
**caractérisé en ce que**
l'ouverture (16) est formée d'une rainure s'étendant en direction de l'axe longitudinal centrale du logement (16.3), creusée dans le matériau du logement (16.3), qui est recouverte, au niveau de la zone orientée vers le logement (16.3), par l'insert (16.2).

6. Amortisseur selon l'une des revendications 1 à 5,
**caractérisé en ce que**
le piston (43) comprend une portion à soufflets (44) qui est en relation fonctionnelle avec le cylindre (11) en fonction des conditions de pression dans l'espace de logement (11.1) et/ou **en ce que** le piston (43) et la portion à soufflets (44) sont reliés entre eux d'une seule pièce.

7. Amortisseur selon l'une des revendications 1 à 6,
**caractérisé en ce que**
la tige de piston (42) est formée d'une seule pièce sur le piston (43).

8. Amortisseur selon l'une des revendications 1 à 7,
**caractérisé en ce que**
à la tige de piston (42), correspond un corps d'appui (30) ou celle-là comprend celui-ci,
**en ce que** le corps d'appui (30) comprend un côté de butée qui se trouve à l'extérieur du corps amortisseur (10) et
**en ce que** le corps d'appui (30) s'appuie contre le piston (43) par l'intermédiaire d'un épaulement (32).

9. Amortisseur selon l'une des revendications 1 à 8,
**caractérisé en ce que**
le piston (43) et la portion à soufflets (44) sont constitués d'un matériau souple élastique et/ou
**en ce que** la tige de piston (42) est renforcée par une chemise (31).

10. Amortisseur selon l'une des revendications 1 à 9,
**caractérisé en ce que**
la tige de piston (42) forme, au niveau de son côté opposé au piston (43), une pièce d'impact (41) en matériau souple élastique.

11. Amortisseur selon l'une des revendications 1 à 10,
**caractérisé en ce que**
la portion à soufflets (44) comprend une partie cylindrique qui est maintenue à distance de la paroi interne du cylindre (11) et **en ce que**, à la zone entourée par la partie cylindrique, correspond une chambre de pression du cylindre (11).

12. Amortisseur selon la revendication 11,
**caractérisé en ce que**
la partie cylindrique de la portion à soufflets (44) forme un logement à ressort (46) dans lequel est logé au moins partiellement un ressort (50) et **en ce que** le ressort (50) soutient le piston (43) contre le mouvement d'entrée du piston (43) dans le cylindre (11) par rapport au cylindre.

13. Amortisseur selon l'une des revendications 1 à 12,
**caractérisé en ce que**
la portion à soufflets (44) comporte un élément d'étanchéité moulé (45) qui étanchéifie entre elles une chambre de pression et une chambre de dépression du cylindre (11).

14. Amortisseur selon la revendication 13,
**caractérisé en ce que** la chambre de dépression ainsi que la chambre de pression sont en liaison d'air avec l'environnement au moyen d'au moins une ouverture (16, 16.1).

15. Amortisseur selon l'une des revendications 1 à 14,
**caractérisé en ce que**
au moins une des ouvertures (16, 16.1) présente un diamètre D < 0,2 mm, de préférence < 0,1 mm et/ou **en ce que** le rapport entre la surface de la section du piston (43) dans la zone orientée vers l'espace creux et la section de l'ouverture (38a, 38b) est supérieur à 4000/1.
